# EUROPÄISCHE PATENTSCHRIFT

(11) **EP 2 686 210 B1**
(45) Veröffentlichungstag und Bekanntmachung des Hinweises auf die Patenterteilung: **14.05.2014**
(21) Anmeldenummer: 12727239.1
(22) Anmeldetag: 14.03.2012
(51) Int. Cl.: B60Q 1/04, B60R 21/34

(54) **BESCHLAGTEIL**
FITTING PART
FERRURE

(30) Priorität: 16.03.2011 DE 102011014066
(43) Veröffentlichungstag der Anmeldung: 22.01.2014
(73) Patentinhaber: Decoma (Germany) GmbH, 66280 Sulzbach / Saar (DE)
(72) Erfinder: KLOSTERMANN, Sandra, Ariane, 7324 Wendlingen (DE)
(74) Vertreter: Rausch, Gabriele
(86) Internationale Anmeldenummer: PCT/DE2012/000257
(87) Internationale Veröffentlichungsnummer: WO 2012/122968

(56) Entgegenhaltungen:
- DE-A1- 10 332 365
- DE-A1-102004 001 706

## Beschreibung

Die Erfindung betrifft ein Beschlagteil zur Abstützung, Anbindung oder Ausrichtung einer Haube oder Verschlussklappe an einem Fahrzeugkörper nach dem Oberbegriff des Anspruchs 1.

Aufgrund steigender gesetzlicher Anforderungen an die Sicherheit von Kraftfahrzeugen in Bezug auf Fahrzeuginsassen und in Bezug auf den Fußgängerschutz existieren eine Vielzahl von Entwicklungen und Verbesserungen der passiven und aktiven Sicherheit.

Bei dem Fußgängerschutz betreffen diese Entwicklungen insbesondere die Frontpartie des Kraftfahrzeugs, wobei sich als besonders kritisch bei einem Kopfaufprall die seitlichen Haubenfugen, die Anbindungspunkte der Haube sowie die Anbindungsstellen und Wellen der Frontwischer erweisen. Um bei einem Kopfaufprall eines Fußgängers, dem Fußgänger möglichst großen Schutz zu bieten, sind unterschiedlich ausgebildete Vorrichtungen bekannt. Eine Möglichkeit der Verringerung von Kopfverletzungen bei einem Fußgängeraufprall sind Vorrichtungen, die durch ein Anheben der Motorhaube einen größeren Deformationsweg und somit einen weicheren Aufprall gegenüber dem steiferen Unterbau ermöglichen. Eine derartige Vorrichtung ist beispielsweise aus der DE 10 2007 012 175 A1 bekannt. Weiterhin sind Vorrichtungen bekannt, die bei einem Aufprall eine Energieaufnahme bzw. Energievernichtung erzielen. Insgesamt ist es ein Ziel möglichst einfach ausgestaltete Vorrichtungen in Bezug auf den Fußgängerschutz bereitzustellen und weiterzuentwickeln. Aus der DE 103 32 365 A1 ist ein Beschlagteil einer Haube bekannt, das alternativ eine Verlagerungsbahn oder abscherende Passmittel aufweist.

Es ist daher eine Aufgabe der vorliegenden Erfindung, ein Beschlagteil zur Abstützung, Anbindung oder Ausrichtung einer Haube oder Verschlussklappe derart weiterzubilden, dass das Verletzungsrisiko eines bei einem Unfall auf einen Bereich der Haube oder Verschlussklappe eines Kraftfahrzeugs aufprallenden Fußgängers, insbesondere das Risiko von Kopfverletzungen verringert wird.

Diese Aufgabe wird durch ein Beschlagteil zur Abstützung, Anbindung oder Ausrichtung einer Haube oder Verschlussklappe mit den im Anspruch 1 angegebenen Merkmalen gelöst.

Durch die efindungsgemäße Ausgestaltung des Beschlagteils, wobei die Passmittel bei einer vorbestimmten Krafteinwirkung abgetrennt werden und das Beschlagteil entlang einer Verlagerungsbahn nach unten verschiebbar gehalten ist, wird eine Vergrößerung des Deformationswegs erzielt. In Abhängigkeit einer möglichen Reibung bei der Verlagerung des Beschlagteils entlang einer Verlagerungsbahn, kann zusätzlich eine Energievernichtung erzielt werden.

In einer vorteilhaften Weiterbildung des Erfindungsgedankens ist vorgesehen, dass die die Passmittel identisch ausgebildet und paarweise in Bezug auf die Verlagerungsbahn beiderseits des Durchbruchs angeordnet sind. Durch diese Ausbildung wird bei einer Krafteinleitung über die Anlagefläche des Beschlagteils die Entstehung eines Drehmomentes vermieden.

Vorteilhafte Ausgestaltungen und Weiterbildungen der vorliegenden Erfindung sind in den Unteransprüchen definiert.

Die Erfindung ist anhand eines Ausführungsbeispiels in der Zeichnung schematisch dargestellt und wird nachfolgend unter Bezugnahme auf die Zeichnungen näher erläutert.
- Fig. 1: zeigt ein Beschlagteil zur Abstützung, Anbindung oder Ausrichtung einer Haube in einer perspektivischen Darstellung,
- Fig. 2: eine Schnittdarstellung längs des in Fig. 1 eingezeichneten Schnitts längs der Linie II-II; und
- Fig. 3: in einer perspektivischen Ansicht eine Einbausituation eines Beschlagteils.

Das in den Zeichnungen dargestellte Beschlagteil 1 dient zum Fußgängerschutz, insbesondere zur Verringerung von Verletzungen bei einem Kopfaufprall, an einem Personenkraftwagen in einem Kollisionsfall. An dem Beschlagteil 1 sind Sollbruchstellen vorgesehen, um als Fußgängerschutzfunktion bei einem Aufprall eines Körperteils einer Person eine Bewegbarkeit der Haube herzustellen. In Abhängigkeit der konstruktiven Ausgestaltung der Verlagerungsbahn und des Befestigungsmittels, welches bei einem Kollisionsfall wie nachstehend erläutert in der Verlagerungsbahn gleitet, kann durch eine mögliche Reibung zusätzlich eine Energievernichtung erzielt werden.

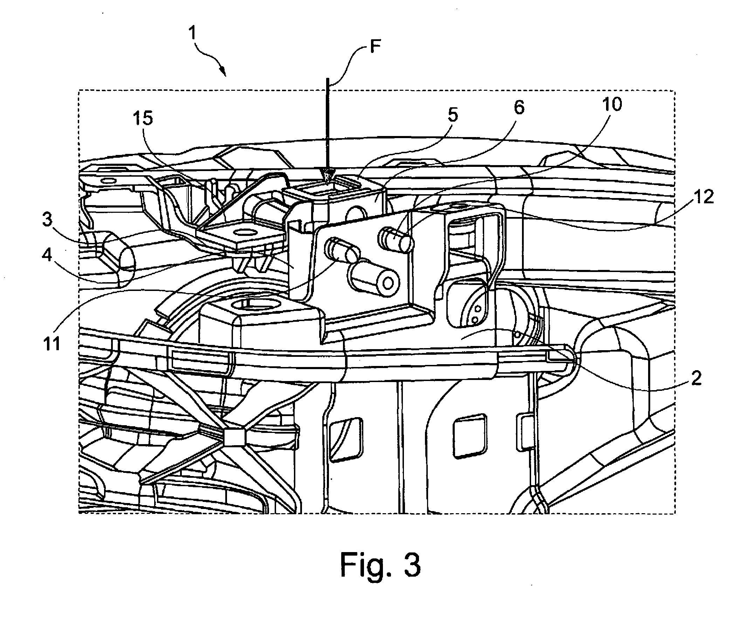

Das Beschlagteil 1 ist, wie es in der Figur 3 dargestellt ist, vorzugsweise beidseits im vorderen Endbereich der Haube zwischen einem karosseriefesten Element 2 und einem Scheinwerfer oder einem mit dem Scheinwerfer verbundenen Element 3 festgelegt. Es besteht im Wesentlichen aus einem u-förmig ausgestalteten Grundkörper 4 sowie einer Anlagefläche 5 für die Haube. Eine Anbindung des Beschlagteils an die Scheinwerfer erfolgt über eine Anbindungsstelle 15, die als im Wesentlichen horizontal von dem Grundkörper 4 ausgehender plattenförmiger Flanschabschnitt ausgeführt ist. Der plattenförmige Abschnitt ist mit einer Durchgangsbohrung versehen, durch die ein geeignetes Befestigungselement zur Festlegung des Beschlagteils an dem Scheinwerferelement durchgeführt wird. Aus der Zeichnung ist ersichtlich, dass der plattenförmige Abschnitt über eine Gelenkstelle 16 im oberen Bereich des Grundkörpers angebunden ist.

Der Grundkörper 4 weist eine als Klemmfläche 6 ausgebildete Fläche auf, in der mittig eine als durchgehendes Langloch ausgebildete Verlagerungsbahn 7 eingebracht ist. In diese Verlagerungsbahn 7 greift im an der Fahrzeugkarosserie montierten Zustand ein stiftförmiges Befestigungsmittel 8 zur Festlegung an das karosseriefeste Element 2 ein. Des Weiteren weist das Beschlagteil 1 einen Passabschnitt 9 mit mehreren Passmitteln 10 auf, die ein formschlüssiges Ausrichten des Beschlagteils 1 im Verhältnis zu korrespondierenden Passmitteln 11 an der Fahrzeugkarosserie ermöglichen. Die an der Fahrzeugkarosserie ausgebildeten Passmittel 11 sind dabei als Durchgangsbohrungen ausgeführt. Die Passmittel 10 des Beschlagteils 1 sind, wie es aus der Darstellung der Figuren ersichtlich ist, beidseits der Verlagerungsbahn 7 angeordnet und sind als Stifte 12 mit vorzugsweise zylindrischem Querschnitt ausgeführt, die vorzugsweise in einem abstehenden Endabschnitt spitz zulaufen.

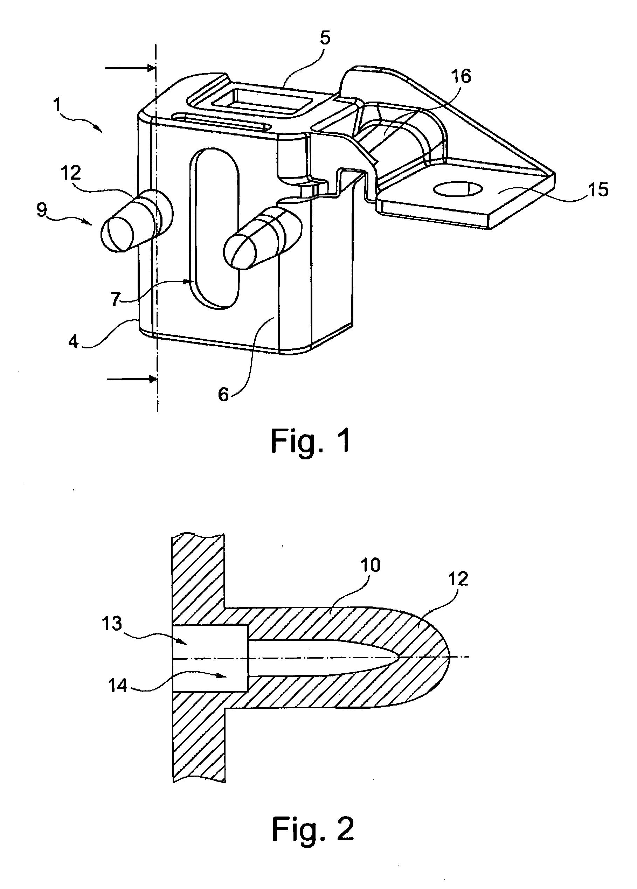

Aus der Schnittdarstellung der Figur 2 kann man ersehen, dass die Stifte 12 innen hohl sind und vorzugsweise ein zum Beschlagteil 1 hin offenes Sackloch 13 aufweisen. Die Wandstärke der hohlen Stifte12 ist des Weiteren im Bereich des Übergangs zum Beschlagteil 1 durch einen Absatz reduziert. Hierdurch wird in diesem Bereich eine Sollbruchstelle 14 erzielt, wodurch bei einem Fußgängeraufprall auf die Fronthaube bei einer vorbestimmten Kraft (schematisch angedeutet durch Pfeil F) ein Abtrennen der Passstifte 12 von dem Beschlagteil 1 und hierdurch eine Verlagerung der Fronthaube längs der Verlagerungsbahn 7 in Richtung der Krafteinwirkung erzielt wird. Hierbei gleitet das Befestigungsmittel 8 längs der Verlagerungsbahn 7. Der entsprechende Verlagerungsweg wird dabei durch die Länge des eingebrachten Langloches festgelegt. Über die obenstehend beschriebene Anbindungsstelle 15 wird bei einer Verlagerung des Beschlagteils 1 gleichzeitig ein Absenken der Scheinwerfer bewirkt. Das Beschlagteil wird vorzugsweise aus einem Kunststoff hergestellt. In einer besonders bevorzugten Ausführungsform wird das Beschlagteil aus einem glasfaserverstärkten Kunststoff hergestellt.

## Patentansprüche

1. Beschlagteil (1) zur Abstützung, Anbindung oder Ausrichtung einer Haube oder Verschlussklappe an einem Fahrzeugkörper, aufweisend eine Anlagefläche (5) für die Haube oder Verschlussklappe, eine Klemmfläche (6) mit einem eine Verlagerungsbahn (7) vorgebenden Durchbruch für ein stiftförmiges Befestigungsmittel (8) zur Anbringung des Beschlagteils an einem Fahrzeugkörper und einem Passabschnitt (9) mit mehreren Passmitteln (10) zum formschlüssigen Ausrichten des Beschlagteils (1) im Verhältnis zu korrespondieren en Passmittel (11) an dem Fahrzeugkörper, wobei die Passmittel (10) des Passabschnitts (9) dazu eingerichtet sind, bei einer vorbestimmten Kraft im Zuge einer Verschiebung des Beschlagteils (1) entlang der Verlagerungsbahn (7) von diesem abgetrennt zu werden, **dadurch gekennzeichnet, dass** die Passmittel (10) des Passabschnitts (9) in Bezug auf die Verlagerungsbahn (7) beiderseits des Durchbruchs (7) angeordnet sind.

2. Beschlagteil (1) nach Anspruch 1, wobei die Passmittel (10) des Passabschnitts (9) identisch ausgebildet und paarweise angeordnet sind.

3. Beschlagteil (1) nach Anspruch 2, wobei die Passmittel (10) des Passabschnitts (9) Stifte (12) mit vorzugsweise zylindrischem Querschnitt sind, die vorzugsweise in einem abstehenden Endabschnitt spitz zulaufen.

4. Beschlagteil (1) nach Anspruch 3, wobei die Stifte (12) innen hohl sind und vorzugsweise ein zum Beschlagteil (1) hin offenes Sackloch (13) aufweisen.

5. Beschlagteil (1) nach Anspruch 4, wobei die Wandstärke der hohlen Stifte (12) im Bereich des Übergangs zum Beschlagteil (1) durch einen Absatz (14) reduziert ist.

## Claims

1. Fitting part (1) for supporting, attaching or orienting a hood or closure cap on, to or with a vehicle body, having an abutment surface (5) for the hood or closure cap, a clamping surface (6) having an aperture, defining a displacement path (7), for a pin-shaped fastening means (8) for attaching the fitting part to a vehicle body, and a locating section (9) having a plurality of locating means (10) for orienting the fitting part (1) in a form-fitting manner in relation to corresponding locating means (11) on the vehicle body, wherein the locating means (10) of the locating section (9) are designed to be detached from the fitting part (1) at a predetermined force during a movement of the latter along the displacement path (7), **characterized in that** the locating means (10) of the locating section (9) are arranged on both sides of the aperture (7) with respect to the displacement path (7).

2. Fitting part (1) according to Claim 1, wherein the locating means (10) of the locating section (9) are formed in an identical manner and arranged in pairs.

3. Fitting part (1) according to Claim 2, wherein the locating means (10) of the locating section (9) are pins (12) having a preferably cylindrical cross section, said pins (12) preferably tapering to a point in a projecting end section.

4. Fitting part (1) according to Claim 3, wherein the pins (12) are internally hollow and preferably have a blind hole (13) that is open towards the fitting part (1).

5. Fitting part (1) according to Claim 4, wherein the wall thickness of the hollow pins (12) is reduced by a shoulder (14) in the region of the transition to the fitting part (1).

## Revendications

1. Partie de ferrure (1) pour supporter, connecter ou orienter un capot ou un volet de fermeture sur un corps de véhicule, comprenant une surface d'appui (5) pour le capot ou le volet de fermeture, une surface de serrage (6) pourvue d'une ouverture prédéfinissant une voie de déplacement (7) pour un moyen de fixation (8) en forme de goupille en vue de la connexion de la partie de ferrure à un corps de véhicule et d'une portion d'ajustement (9) comprenant plusieurs moyens d'ajustement (10) pour orienter par coopération de formes la partie de ferrure (1) par rapport à des moyens d'ajustement (11) correspondants sur le corps de véhicule, les moyens d'ajustement (10) de la portion d'ajustement (9) étant conçus pour, en cas de force prédéterminée au cours d'un glissement de la partie de ferrure (1) le long de la voie de déplacement (7), être séparés de celle-ci, **caractérisée en ce que** les moyens d'ajustement (10) de la portion d'ajustement (9) sont disposés de part et d'autre de l'ouverture (7) par rapport à la voie de déplacement (7).

2. Partie de ferrure (1) selon la revendication 1, dans laquelle les moyens d'ajustement (10) de la portion d'ajustement (9) sont réalisés de manière identique et sont disposés par paires.

3. Partie de ferrure (1) selon la revendication 2, dans laquelle les moyens d'ajustement (10) de la portion d'ajustement (9) sont des goupilles (12) présentant une section transversale de préférence cylindrique qui se terminent de préférence en pointe dans une portion d'extrémité saillante.

4. Partie de ferrure (1) selon la revendication 3, dans laquelle les goupilles (12) sont intérieurement creuses et comprennent de préférence un trou borgne (13) ouvert en direction de la partie de ferrure (1).

5. Partie de ferrure (1) selon la revendication 4, dans laquelle l'épaisseur de paroi des goupilles creuses (12) est réduite par un épaulement (14) dans la région de la transition vers la partie de ferrure (1).
